# EUROPÄISCHE PATENTSCHRIFT

(11) **EP 3 736 712 B1**
(45) Veröffentlichungstag und Bekanntmachung des Hinweises auf die Patenterteilung: **18.12.2024**
(21) Anmeldenummer: 19173775.8
(22) Anmeldetag: 10.05.2019
(51) Int. Cl.: G06F 8/51, G06F 30/30, G06F 117/08

(54) **VERFAHREN ZUM ZUGRIFF AUF EINEN SPEICHER EINES INTEGRIERTEN SCHALTKREISES, PROGRAMM, VORRICHTUNG ZUR DATENVERARBEITUNG UND NETZWERK**
METHOD FOR ACCESSING A MEMORY OF AN INTEGRATED CIRCUIT, PROGRAM, DATA PROCESSING DEVICE AND NETWORK
PROCÉDÉ D'ACCÈS À UNE MÉMOIRE D'UN CIRCUIT INTÉGRÉ, PROGRAMME, DISPOSITIF DE TRAITEMENT DES DONNÉES ET RÉSEAU

(43) Veröffentlichungstag der Anmeldung: 11.11.2020
(73) Patentinhaber: Carl Zeiss Industrielle Messtechnik GmbH, 73447 Oberkochen (DE)
(72) Erfinder: Gruber, Udo, 91799 Langenaltheim (DE); Maier, Thomas, 73431 Aalen (DE)
(74) Vertreter: Patentanwälte Bressel und Partner mbB

(56) Entgegenhaltungen:
- US-B2- 7 340 727
- MASNICKI ROMUALD: "The fluency of data flow in the instrument for measurement and registration of parameters of the electrical power network", 2015 IEEE 15TH INTERNATIONAL CONFERENCE ON ENVIRONMENT AND ELECTRICAL ENGINEERING (EEEIC), IEEE, 10 June 2015 (2015-06-10), pages 2040 - 2044, XP033180274, DOI: 10.1109/EEEIC.2015.7165489
- ONE TECHNOLOGY WAY: "250 kSPS, 12-Bit Impedance Converter, Network Analyzer AD5934", 1 January 2005 (2005-01-01), pages 1 - 32, XP055444181, Retrieved from the Internet <URL:http://www.avrfreaks.net/sites/default/files/AD5934.pdf> [retrieved on 20180124]
- ANONYMOUS: "6. Recommended HDL Coding Styles", 1 January 2009 (2009-01-01), XP055632768, Retrieved from the Internet <URL:http://www.gstitt.ece.ufl.edu/courses/spring10/eel4712/lectures/vhdl/qts_qii51007.pdf> [retrieved on 20191016]

## Beschreibung

Die Erfindung betrifft ein Verfahren zum Zugriff auf einen Speicher eines integrierten Schaltkreises durch eine weitere Recheneinrichtung, ein Programm, eine Vorrichtung zur Datenverarbeitung sowie ein Netzwerk.

Aus dem Stand der Technik bekannt ist ein System zur Programmierung eines konfigurierbaren Halbleitergeräts mit einem programmierbaren Steuergerät, einem programmierbaren Computer, einem Verbindungsglied, einer konfigurierbaren Hardwareeinrichtung mit konfigurierbaren analogen Elementen und einem Speicher, der mehrere Speicherplätze aufweist und mit einer programmierbaren Steuereinrichtung über das Verbindungsglied gekoppelt ist. Dies ist beispielsweise in der EP 1 376 416 B1 beschrieben.

Weiter ist bekannt, integrierte Schaltkreise (IC), insbesondere in Form von sogenannten FPGA (field programmable gate array), zur Ausführung von Regelungen, insbesondere Bewegungsregelungen, zu benutzen. Beispielsweise kann ein solcher integrierter Schaltkreis zur Bewegungsregelung von beweglichen Elementen eines Koordinatenmessgeräts verwendet werden.

Ebenfalls bekannt ist der Einsatz von CPU-basierten Recheneinrichtungen, insbesondere von Mikrokontrollern, zur Ausführung weitere Funktionen, beispielsweise zur Kommunikation mit weiteren Systemen oder Einrichtungen, zur Interpretation von Befehlen, die von weiteren Systemen erzeugt und übermittelt werden oder zur Ausführung von weiteren Funktionen.

Weiter bekannt ist, dass für den Betrieb von einem System, beispielsweise dem vorhergehend erläuterten Koordinatenmessgerät, sowohl eine IC-basierte Recheneinrichtung, also eine Recheneinrichtung, die einen oder mehrere integrierte Schaltkreise umfasst, sowie eine CPU-basierte Recheneinrichtung zum Einsatz kommen, wobei diese im Betrieb miteinander kommunizieren, also eine Datenübertragung ausführen, insbesondere gemäß einem sogenannten SPI-Protokoll.

Das Dokument "Masnicki Romuald: The fluency of data flow in the instrument for measurement and registration of parameters of the electrical power network, 2015 IEEE 15th Int. Conf. on Environment and Electrical Engineering (EEEIC), IEEE, 10. Juni 2015, Seiten 2040-2044, DOI: 10.1109/EEEIC.2015.7165489" offenbart eine Datenmessung und Registrierung sowie Synchronisierungsoperationen in der Kommunikation zwischen verschiedenen Funktionsblöcken.

Die US 7,340,727 B2 offenbart ein Verfahren zum Übersetzen von Hardwarestrukturdesignsprache in eine allgemeine Programmiersprache.

Das Dokument "One Technology Way: 250 kSPS, 12-Bit Impedance Converter, Network Analyzer AD5934", 1. Januar 2005, Seiten 1-32, gefunden unter http://www.avrfreaks.net/sites/default/files/AD5934.pdf" offenbart eine Beschreibung eines Impedanzwandlersystems.

Das Dokument "Anonymous: 6. Recommended HDL Coding Styles, 1. Januar 2009, gefunden im Internet unter http://www.gstitt.ece.ufl.edu/courses/spring 10/eel4712/lectures/vhdl/gts gii51007.pdf" offenbart Empfehlungen für die HDL-Programmierung.

Es stellt sich das technische Problem, eine Kommunikation zwischen einer IC-Recheneinrichtung und einer weiteren Recheneinrichtung zu verbessern, insbesondere um die Zeitdauer zur Ausführung bestimmter Funktionen, bei der auf den Speicher des integrierten Schaltkreises zugegriffen wird, sowie einen Aufwand für die Speicherzugriffsverwaltung zu reduzieren.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zum Zugriff auf einen Speicher eines integrierten Schaltkreises durch eine weitere Recheneinrichtung. Der integrierte Schaltkreis kann insbesondere eine IC-basierte Recheneinrichtung oder ein Teil einer solchen IC-basierten Recheneinrichtung bilden. Wie nachfolgend noch näher erläutert, ist der integrierte Schaltkreis insbesondere als FPGA ausgebildet oder bildet einen Teil eines FPGA. Die weitere Recheneinrichtung kann insbesondere eine CPU-Recheneinrichtung sein, also eine Recheneinrichtung, die eine CPU umfasst. Wie nachfolgend ebenfalls noch näher erläutert kann die weitere Recheneinrichtung insbesondere ein Mikrokontroller sein.

Der integrierte Schaltkreis und die weitere Recheneinrichtung können hierbei ein Netzwerk oder einen Teil eines solchen Netzwerkes bilden. Hierfür können der integrierte Schaltkreis und die weitere Recheneinrichtung daten- und/oder signaltechnisch miteinander verbunden sein, insbesondere über geeignete Schnittstellen. Somit ist eine Datenübertragung zwischen diesen Einheiten möglich.

Weiter greift die weitere Recheneinrichtung in Abhängigkeit von recheneinrichtungsspezifischen Informationen auf den Speicher des integrierten Schaltkreises zu.

Die recheneinrichtungsspezifischen Zugriffsinformationen für den Zugriff auf den Speicher des integrierten Schaltkreises werden aus vorbestimmten IC-spezifischen Speicherinformationen erzeugt. Dies kann bedeuten, dass die recheneinrichtungsspezifischen Zugriffsinformationen zur Laufzeit des Verfahrens erzeugt werden.

Der Zugriff kann hierbei beispielsweise ein Lesezugriff oder ein Schreibzugriff sein. Dieses Erzeugen kann auch als Übersetzen bezeichnet werden.

Speicherinformationen können Informationen über eine Konfiguration des Speichers, einen Aufbau des Speichers und/oder Informationen über Adressen, insbesondere über Adresswerte, der Speicherstellen des Speichers sein. Weiter können die Speicherinformationen eine Information über eine Variable oder Konstante sowie der dieser Größe zugeordneten Adresse umfassen.

Das Erzeugen der recheneinrichtungsspezifischen Zugriffsinformationen aus den vorbestimmten IC-spezifischen Speicherinformationen kann insbesondere durch ein sogenanntes Parsen erfolgen. Mit anderen Worten können IC-spezifische Speicherinformationen, die insbesondere in einer IC-spezifischen Programmiersprache kodiert oder beschrieben sind, in eine recheneinrichtungsspezifische Programmiersprache übersetzt werden.

Insbesondere können die erzeugten Informationen durch die weitere Recheneinrichtung genutzt werden, um einen Befehl, insbesondere einen Lesebefehl oder einen Schreibbefehl, zu erzeugen und an den integrierten Schaltkreis zu übertragen, wobei dieser dann in Abhängigkeit der übertragenen Information, die in dem Befehl kodiert sein können, den gewünschten Zugriff durchführt. Die Übertragung kann gemäß einem gewünschten Protokoll erfolgen, insbesondere gemäß dem vorhergehend angeführten SPI-Protokoll. Somit kann die weitere Recheneinrichtung mit den recheneinrichtungsspezifischen Zugriffsinformationen einen SPI-basierten Befehl erzeugen und an den integrierten Schaltkreis übertragen, der dann dem Befehl entsprechend einen Speicherzugriff durchführt.

In einem Befehl kann z.B. eine Speicherinformation kodiert sein, z.B. ein Adresswert einer Speicherstelle. So kann beispielsweise in einem Lesebefehl ein Adresswert einer Speicherstelle des Speichers kodiert sein. Bei Ausführung des Befehls, insbesondere durch den Schaltkreis, kann dann ein Lesezugriff auf die Speicherstelle durchgeführt und der dort gespeicherte Wert z.B. ausgelesen werden. Alternativ kann in einem Schreibbefehl ein Adresswert einer Speicherstelle kodiert sein, wobei dann ein Schreibzugriff auf die entsprechende Speicherstelle erfolgt, beispielsweise um einen Wert in der Speicherstelle zu speichern. Der zu speichernde Wert kann ebenfalls im Befehl kodiert sein.

In dem Verfahren nutzt die weitere Recheneinrichtung die Speicherinformationen, um Zugriffsbefehle zu erzeugen, die dann an den integrierten Schaltkreis übermittelt werden, der dann unmittelbar, also ohne weitere Datenverarbeitungsvorgänge zur Befehlsinterpretation, auf den Speicher zugreifen kann.

Enthalten die Speicherinformationen Adresswerte, also Werte, die die Adresse oder die Position einer bestimmten Speicherstelle repräsentieren, so wird in vorteilhafter Weise eine Pointer-Funktionalität durch das beschriebene Verfahren ermöglicht. So können die IC-spezifischen Speicherinformationen und somit auch die recheneinrichtungsspezifischen Zugriffsinformationen diese Adresswerte umfassen, wodurch die weitere Recheneinrichtung durch Verwendung des Adresswerts auf die entsprechende Speicherstelle zugreifen kann, insbesondere indem in einem entsprechenden Zugriffsbefehl der Adresswert kodiert wird.

Hierdurch kann die Ausführung bestimmter Funktionen wesentlich beschleunigt werden, insbesondere von Funktionen, bei deren Ausführung auf den Speicher des integrierten Schaltkreises zugegriffen wird. So ist es beispielsweise nicht mehr notwendig, dass der integrierte Schaltkreis selbst die Adresse bzw. Speicherstelle ermittelt, auf die zum Lesen oder Schreiben zugegriffen werden soll, wenn ein entsprechender Zugriffsbefehl von der weiteren Recheneinrichtung an den integrierten Schaltkreis übertragen wird.

Ein weiterer Vorteil ist die automatische Synchronisation der Speicheradressen des integrierten Schaltkreises mit weiteren Recheneinrichtungen, wodurch der Aufwand für die Speicherzugriffsverwaltung reduziert wird.

Auch beschrieben wird ein Verfahren zum Betreiben eines Netzwerks umfassend den integrierten Schaltkreis und die weitere Recheneinrichtung, wobei in einem ersten Schritt die IC-spezifischen Speicherinformationen bereitgestellt werden. Diese können beispielsweise durch einen Programmierer bereitgestellt werden. In einem weiteren Schritt werden aus diesen IC-spezifischen Speicherinformationen die recheneinrichtungsspezifischen Zugriffsinformationen erzeugt, wobei dann in einem dritten Schritt die weitere Recheneinrichtung in Abhängigkeit der recheneinrichtungsspezifischen Zugriffsinformationen auf den Speicher des integrierten Schaltkreises zugreift.

In einer weiteren Ausführungsform ist der integrierte Schaltkreis FPGA ausgebildet oder bildet einen Teil eines solchen FPGA. Hierdurch wird in vorteilhafter Weise eine zeitlich schnelle Ausführung gewünschter Funktionen ermöglicht.

Alternativ, vorzugsweise jedoch kumulativ, ist die weitere Recheneinrichtung als CPU-Recheneinrichtung ausgebildet, insbesondere als Mikrokontroller. Hierdurch wird in vorteilhafter Weise die Funktionalität sowie konsequenterweise das Einsatzgebiet eines aus solchen Recheneinrichtungen bestehenden Netzwerks vergrößert.

Die IC-Speicherinformationen und die recheneinrichtungsspezifischen Zugriffsinformationen sind erfindungsgemäß jeweils in einer Datei kodiert. Die Datei, die die recheneinrichtungsspezifischen Zugriffsinformationen kodiert, ist in einer Speichereinrichtung gespeichert. Auf diese Speichereinrichtung wird bei einer Kompilierung zur Erzeugung von Code oder Code-Mitteln, der durch die weitere Recheneinrichtung ausführbar ist, zugegriffen. Die Speichereinrichtung kann z.B. eine Speichereinrichtung einer so genannten Entwicklungsrecheneinrichtung sein, die eine externe Recheneinrichtung sein kann. Auch kann die Speichereinrichtung eine Speichereinrichtung der weiteren Recheneinrichtung oder eine Speichereinrichtung sein, auf die die weitere Recheneinrichtung zugreifen kann. Die Datei, die die IC-spezifischen Speicherinformationen kodiert kann insbesondere eine für den Schaltungsentwurf des integrierten Schaltkreises genutzte Datei sein. Diese kann beispielsweise für das Umsetzen in eine Programmierdatei zum Beladen des integrierten Schaltkreises dienen, wobei die Programmierdatei durch ein sogenanntes Kompilieren erzeugt werden kann.

Aus der Datei, die die IC-spezifischen Speicherinformationen kodiert, wird die Datei, die die recheneinrichtungsspezifischen Zugriffsinformationen kodiert, erzeugt, wobei diese dann durch die weitere Recheneinrichtung zum Zugriff genutzt wird. Hierdurch ergibt sich in vorteilhafter Weise eine einfach implementierbare Erzeugung der gewünschten Information sowie eine effiziente Verwaltung dieser Informationen.

In einer weiteren Ausführungsform sind die IC-spezifischen Speicherinformationen VHDL-basiert beschrieben. Alternativ, vorzugsweise jedoch kumulativ, sind die recheneinrichtungsspezifischen Informationen C-basiert oder C++-basiert beschrieben. Das Kürzel VHDL bezeichnet hierbei eine Hardwarebeschreibungssprache, nämlich die sogenannte very high speed integrated circuit hardware description language.

Insbesondere kann also die Datei, die die IC-spezifischen Speicherinformationen kodiert, VHDL-basiert und/oder die Datei, die die recheneinrichtungsspezifischen Informationen kodiert, C-basiert oder C++-basiert aufgebaut sein. Hierdurch ergibt sich in vorteilhafter Weise eine rechentechnisch einfache Bereitstellung und Nutzung der gewünschten Informationen.

In einer weiteren Ausführungsform greift eine zweite weitere Recheneinrichtung in Abhängigkeit von weiteren Zugriffsinformationen auf den Speicher des integrierten Schaltkreises zu, wobei die weiteren Zugriffsinformationen aus den recheneinrichtungsspezifischen Zugriffsinformationen erzeugt sind oder werden.

Somit können aus den recheneinrichtungsspezifischen Zugriffsinformationen weitere Zugriffsinformationen erzeugt werden. Weiter können die recheneinrichtungsspezifischen Zugriffsinformationen und die weiteren Zugriffsinformationen in verschiedenen Programmiersprachen beschrieben sein.

In Abhängigkeit der weiteren Zugriffsinformationen können insbesondere weitere Systeme oder weitere Recheneinrichtungen, die von dem integrierten Schaltkreis und der ersten weiteren Recheneinrichtung verschieden sind, auf den Speicher zugreifen.

Insbesondere können aus den recheneinrichtungsspezifischen Zugriffsinformationen, die C- oder C++-basiert beschrieben sind, weitere Zugriffsinformationen erzeugt werden, die C#-basiert beschrieben sind. Dies kann beispielsweise erfolgen, indem die vorhergehend erläuterte Datei, die die recheneinrichtungsspezifischen Zugriffsinformationen kodiert, in eine weitere Datei übersetzt wird, die die weiteren Zugriffsinformation kodiert.

In diesem Fall kann die Recheneinrichtung, die die weiteren Zugriffsinformationen nutzt, ebenfalls Teil des vorhergehend erläuterten Netzwerks sein. Eine solche zweite weitere Recheneinrichtung kann hierbei signal- und/oder datentechnisch mit der ersten weiteren Recheneinrichtung verbunden sein. Die zweite weitere Recheneinrichtung kann insbesondere ebenfalls eine CPU-basierte Recheneinrichtung sein, insbesondere ein weiterer Mikrokontroller. Es ist möglich, dass die zweite weitere Recheneinrichtung daten- und/oder signaltechnisch nicht direkt, sondern nur über die erste weitere Recheneinrichtung mit dem integrierten Schaltkreis verbunden ist.

Hierdurch wird in vorteilhafter Weise ermöglicht, dass auch weitere Recheneinrichtungen, beispielsweise Recheneinrichtungen von PC, insbesondere in Form von portablen Geräten, auf den Speicher des integrierten Schaltkreises und die darin gespeicherten Informationen zugreifen können.

Das Übersetzen der Zugriffsinformationen der weiteren Recheneinrichtung in die Zugriffsinformationen für die zweite weitere Recheneinrichtung kann hierbei zur Laufzeit des Verfahrens erfolgen. So kann beispielsweise eine Funktion, die von der zweiten weiteren Recheneinrichtung ausgeführt wird, beispielsweise eine Diagnosefunktion, über die erste weitere Recheneinrichtung aufgrund dieser zur Laufzeit ausgeführten Übersetzung auf den Speicher des integrierten Schaltkreises zugreifen.

Somit kann beispielsweise ein Nutzer, beispielsweise Servicepersonal, mit einem PC, der die zweite weitere Recheneinrichtung umfasst, diese an das erläuterte Netzwerk anbinden und auf den Speicher des integrierten Schaltkreises schnell und in einfacher Weise zugreifen. Hierdurch kann dann in vorteilhafter Weise die zur Ausführung von Funktionen durch die zweite weitere Recheneinrichtung, beispielsweise von Diagnosefunktionen, benötigte Zeitdauer reduziert werden.

Weiter erfindungsgemäß erfolgt das Erzeugen der recheneinrichtungsspezifischen Zugriffsinformationen durch Ausführung eines vorbestimmten Übersetzungsalgorithmus. Dieser kann beispielsweise derart durchgeführt werden, dass vorbestimmte Zeichen oder Zeichenfolgen, die in der IC-spezifischen Speicherinformationsbeschreibung enthalten sind, durch diesen zugeordnete Zeichen bzw. Zeichenfolgen gemäß der recheneinrichtungsspezifischen Zugriffsinformationsbeschreibung entsprechen. Entsprechend kann auch die Erzeugungder weiteren Zugriffsinformationen aus den recheneinrichtungsspezifischen Zugriffsinformationen erfolgen.

Insbesondere kann der Übersetzungsalgorithmus ein Suchen-und-Ersetzen-Algorithmus sein, wobei vorbestimmte Zeichen oder Zeichenfolgen gesucht und durch andere vorbestimmte Zeichen oder Zeichenfolgen, wie vorhergehend erläutert, ersetzt werden. Hierdurch ergibt sich in vorteilhafter Weise eine einheitliche, schnelle und genaue Erzeugung der benötigten Informationen, wodurch wiederum ein zuverlässiger Speicherzugriff möglich wird.

In einer weiteren Ausführungsform umfassen die IC-spezifischen Speicherinformationen Informationen über eine Speichergröße des Speichers. Dieser Speicher kann hierbei einen oder mehrere Speicherbereich(e) umfassen, insbesondere einen enum-Bereich und/oder einen sogenannten Buffer-Speicherbereich und/oder einen sogenannten Konstanten-Speicherbereich. Ein Speicherbereich kann einen Speicherblock oder mehrere Speicherblöcke umfassen, wobei ein Speicherblock wiederum eine oder mehrere Speicherstelle(n) umfassen kann. Es ist beispielsweise möglich, dass ein Konstanten-Speicherbereich 8 Speicherblöcke umfasst. Weiter ist es möglich, dass ein Speicherblock 8 Speicherstellen (Adressspeicherstellen) umfasst. Weiter ist es möglich, dass eine Größe des Buffer-Speicherbereichs oder eine Größe des Buffer- und enum-Speicherbereichs 2¹³ Speicherstellen umfasst.

Alternativ, vorzugsweise aber kumulativ, umfassen die Speicherinformationen Informationen über eine Anzahl und eine Größe von Speicherbereichen und/oder über eine Anzahl und eine Größe von Speicherblöcken des Speichers oder eines Speicherbereichs. Weiter alternativ, vorzugsweise aber kumulativ, umfassen die Informationen Informationen über eine Größe eines Konstanten-Speicherbereichs und/oder über eine Größe eines Buffer-Speicherbereichs.

Für verschiedene Speicherbereiche können verschiedene Zugriffsrechte existieren. So ist es beispielsweise möglich, dass auf Speicherstellen in einem Konstanten-Speicherbereich während aller Funktionen, die von dem integrierten Schaltkreis ausgeführt werden, zugegriffen werden kann. Weiter ist es möglich, dass auf einen enum-Speicherbereich nur bei der Ausführung bestimmter Funktionen zugegriffen werden kann.

Der Konstanten-Speicherbereich kann einen Hardware-Adressraum bereitstellen. Insbesondere können in dem Konstanten-Speicherbereich die vorhergehend erläuterten Adresswerte von Speicherstellen gespeichert sein.

Die Größe eines Speicherbereichs kann beispielsweise in Bit kodiert sein. Die Information über die Anzahl von Speicherbereichen und/oder von Speicherblöcken kann ebenfalls in Form von Bits kodiert sein.

Einzelne, mehrere oder aber alle der angeführten Informationen ermöglichen in vorteilhafter Weise eine einfache und zuverlässige Übersetzung und somit Erzeugung von recheneinrichtungsspezifischen Zugriffsinformationen. So kann in Abhängigkeit dieser Informationen ein Adresswert für eine bestimmte Speicherstelle bestimmt werden und dieser, wie vorhergehend erläutert, genutzt werden, um auf den an dieser Speicherstelle gespeicherten Wert zuzugreifen.

Die IC-spezifischen Speicherinformationen umfassen erfindungsgemäß Informationen über Speicherstellen eines Speicherblocks eines ersten Speicherbereichs, insbesondere des Konstanten-Speicherbereichs. Diese Speicherstellen können Adressspeicherstellen für die vorhergehend erläuterten Adresswerte sein. Erfindungsgemäß umfassen oder bilden diese Speicherinformationen diese Adresswerte oder einen Wert für die Berechnung eines Adresswerts, z.B. mittels einer vorbestimmten Berechnungsvorschrift. Durch die Berechnungsvorschrift kann z.B. aus dem gespeicherten Wert und gegebenenfalls anderen Werten, z.B. aus speicherinternen Größen, beispielsweise Konstanten und/oder weiteren gespeicherten Werten, der gewünschten Adresswert berechnet werden. Hierdurch ergibt sich in vorteilhafter Weise ein einfacher Zugriff auf Adresswerte und somit dann auch auf die an der entsprechenden adressierten Speicherstelle gespeicherten Werte. Dies reduziert, wie vorhergehend erläutert, den Aufwand für die Speicherzugriffsverwaltung.

In einer weiteren Ausführungsform umfassen die Informationen über Speicherstellen des Speicherblocks Informationen über eine erste Speicherstelle eines ersten Speicherblocks, wobei die erste Speicherstelle des ersten Speicherblocks in Abhängigkeit einer Information über eine erste Speicherstelle eines ersten Speicherbereichs, insbesondere des Konstanten-Speicherbereichs bestimmt wird. Es ist möglich, dass ein Speicherblock mehrere Speicherstellen umfasst, die sequenziell, also aufeinander folgend, im Speicher angeordnet sind. Somit kann jeder Speicherstelle eines Speicherblocks eine Ordnungszahl gemäß dieser Sequenz zugeordnet sein. Weiter ist es möglich, dass auch die vorhergehend erläuterten Speicherbereiche voneinander verschiedene Speicherstellen umfassen, die ebenfalls sequentiell im Speicher angeordnet sind. Hierbei umfasst ein Speicherbereich in der Regel zusammengehörige Speicherstellen, also Speicherstellen, die mindestens eine unmittelbare Nachbarspeicherstelle aufweisen, die dem gleichen Speicherbereich zugeordnet ist. Eine Nachbarsspeicherstelle einer Speicherstelle mit einer Ordnungszahl ist insbesondere eine Speicherstelle mit der nächstgrößeren oder nächstkleineren Ordnungszahl.

Beispielsweise ergibt sich der Adresswert der ersten Speicherstelle des ersten Speicherblocks als der Wert, der der Größe des Buffer-Speicherbereichs oder der Summe der Größe des Buffer-Speicherbereichs und des enum-Speicherbereichs entspricht.

Hierdurch ergibt sich in vorteilhafter Weise eine einfache Übersetzung der Speicherinformationen in Zugriffsinformationen für die weitere Recheneinrichtung, insbesondere auch bei dynamisch erweiterbaren oder rekonfigurierbaren Speicherinformationen. Die vorgeschlagenen Informationen ermöglichen insbesondere in vorteilhafter Weise, dass, zum Beispiel für einen neuen Einsatzzweck, existierende Speicherstellen gelöscht, für die Speicherung anderer Werte genutzt oder aber neue Speicherstellen zur Nutzung hinzugefügt werden können, wobei diese Rekonfiguration in einfacher Weise erfolgen kann, insbesondere durch ein Bereitstellen neuer ICspezifischer Speicherinformationen.

In einer weiteren Ausführungsform umfassen die Informationen über Speicherstellen eines weiteren Speicherblocks Informationen über eine erste Speicherstelle des weiteren Speicherblocks, wobei die erste Speicherstelle des weiteren Speicherblocks in Abhängigkeit der Information über die erste Speicherstelle des ersten Speicherblocks und in Abhängigkeit der Information über die Größe der Speicherblöcke bestimmt wird. So ergibt sich beispielsweise der Adresswert der ersten Speicherstelle eines zweiten Speicherblocks als Summe des Adresswerts der ersten Speicherstelle des ersten Speicherblocks und der Größe eines Speicherblocks.

In einer weiteren Ausführungsform wird eine Information über eine weitere Speicherstelle eines Speicherblocks in Abhängigkeit der Information über die ersten Speicherstelle des Speicherblocks und einer vorbestimmten Speicherzellenzählkonstanten bestimmt. So kann sich beispielsweise der Adresswert einer zweiten Speicherstelle eines Speicherblocks als Summe des Adresswerts der ersten Speicherstelle dieses Speicherblocks und der Konstanten 1 ergeben. Weiter kann sich der Adresswert einer dritten Speicherstelle eines Speicherblocks als Summe des Adresswerts der ersten Speicherstelle dieses Speicherblocks und der Konstanten 2 ergeben.

Durch die beschriebenen Informationen ergibt sich in vorteilhafter Weise, dass der Speicher des integrierten Schaltkreises in optimaler Weise ausgenutzt werden kann. Insbesondere wird ermöglicht, dass Speicherstellen oder Speicherblöcke im Speicher des integrierten Schaltkreises lückenlos aneinander angrenzen, auch wenn man die Größe eines Speicherblocks vergrößert oder verkleinert bzw. Speicherblöcke hinzufügt oder entfernt.

Die Ausführungsformen, die die IC-spezifischen Speicherinformationen, insbesondere deren Inhalt und deren Aufbau, betreffen, sowie deren Unteraspekte können hierbei eine unabhängige Erfindung darstellen. Somit wird ein Verfahren, insbesondere ein computerimplementiertes Verfahren, zum Zugriff auf einen Speicher eines integrierten Schaltkreises in Abhängigkeit von IC-spezifischen Speicherinformationen beschrieben, wobei die IC-spezifischen Speicherinformationen Informationen über eine Speichergröße und/oder Informationen über eine Anzahl und eine Größe von Speicherbereichen und/oder über eine Anzahl und eine Größe von Speicherblöcken des Speichers oder Speicherbereichs und/oder über eine Größe eines Konstanten-Speicherbereichs und/oder über eine Größe eines

Buffer-Speicherbereichs umfassen. Weiter können die IC-spezifischen Speicherinformationen Informationen über Speicherstellen eines Speicherblocks eines ersten Speicherbereichs, insbesondere des Konstanten-Speicherbereichs, umfassen. Weiter können die Informationen über Speicherstellen eines Speicherblocks Informationen über eine erste Speicherstelle eines ersten Speicherblocks umfassen, wobei die erste Speicherstelle eines ersten Speicherblocks in Abhängigkeit einer Information über eine erste Speicherstelle eines ersten Speicherbereichs, insbesondere des Konstanten-Speicherbereichs, bestimmt wird. Weiter können die Informationen über Speicherstellen eines weiteren Speicherblocks Informationen über eine erste Speicherstelle des weiteren Speicherblocks umfassen, wobei die erste Speicherstelle des weiteren Speicherblocks in Abhängigkeit der Information über die erste Speicherstelle des ersten Speicherblocks und in Abhängigkeit der Information über die Größe der Speicherblöcke bestimmt wird und/oder dass eine Information über eine weitere Speicherstellen eines Speicherblocks in Abhängigkeit der Information über die erste Speicherstelle des Speicherblocks und einer vorbestimmten Speicherstellenzählkonstanten bestimmt wird.

Weiter beschrieben wird auch ein Programm, welches, wenn es auf oder durch einen Computer ausgeführt wird, den Computer veranlasst, einen, mehrere oder alle Schritte eines solchen Verfahrens zum Zugriff auf einen Speicher durchzuführen.

Weiter wird ein integrierter Schaltkreis mit einem Speicher sowie ein Speicher sowie ein Netzwerk mit dem integrierten Schaltkreis oder Speicher beschrieben, der entsprechend der Speicherinformationen ausgebildet bzw. organisiert ist.

Derartige IC-spezifische Speicherinformationen und die entsprechende Ausbildung/Organisation des Speichers ermöglichen in vorteilhafter Weise die vorhergehend beschriebene bessere Ausnutzung des Speichers des integrierten Schaltkreises, insbesondere das lückenlose Aneinandergrenzen der Speicherstellen oder Speicherblöcke im Speicher des integrierten Schaltkreises, auch wenn man die Größe eines Speicherblocks vergrößert oder verkleinert bzw. Speicherblöcke hinzufügt oder entfernt.

In einer weiteren Ausführungsform sind oder werden die Zugriffsinformationen in einer Speichereinrichtung der weiteren Recheneinrichtung oder in einer von dieser zugänglichen Speichereinrichtung gespeichert. Weiter können die IC-spezifischen Speicherinformationen, wie vorhergehend erläutert, zur Implementierung des integrierten Schaltkreises genutzt werden. Selbstverständlich können auch die weiteren Zugriffsinformationen in einer Speichereinrichtung der zweiten weiteren Recheneinrichtung oder in einer von dieser zugänglichen Speichereinrichtung gespeichert sein oder werden.

In einer weiteren Ausführungsform sind der integrierte Schaltkreis und die weitere Recheneinrichtung Teil einer Koordinatenmesseinrichtung. Hierbei kann der integrierte Schaltkreis insbesondere zur Steuerung oder Regelung von beweglichen Teilen der Koordinatenmesseinrichtung dienen. Weiter kann der integrierte Schaltkreis Sensorwerte, beispielsweise Werte von Positions-, Geschwindigkeits- und/oder Kraftsensoren, auslesen, insbesondere zur Durchführung der vorhergehend angeführten Bewegungssteuerung oder -regelung. Hierzu kann der integrierte Schaltkreis mit den entsprechenden Sensoren daten- und/oder signaltechnisch verbunden sein.

Die weitere Recheneinrichtung kann zur Kommunikation mit weiteren Einrichtungen oder Systemen dienen, beispielsweise über ein geeignetes Bus-System, insbesondere ein CAN-Bussystem, ein EtherCAT-Bussystem, ein Ethernet-Bussystem, ein ModBus-System und ein Parallelbus-System. Weiter kann die weitere Recheneinrichtung zur Kommunikation mit der vorhergehend erläuterten zweiten weiteren Recheneinrichtung dienen.

Hierdurch ergibt sich in vorteilhafter Weise ein verbesserter Betrieb eines Koordinatenmessgeräts, insbesondere durch schnellere Speicherzugriffe.

In einer weiteren Ausführungsform ist das Verfahren ein computerimplementiertes Verfahren. Dies wird nachfolgend noch näher erläutert.

Weiter vorgeschlagen wird ein Programm, welches, wenn es auf oder durch einen Computer ausgeführt wird, den Computer veranlasst, einen, mehrere oder alle Schritte eines Verfahrens zum Zugriff auf einen Speicher eines integrierten Schaltkreises gemäß einer in dieser Offenbarung erläuterten Ausführungsformen durchzuführen.

Ein Computer kann hierbei jede Art von Datenverarbeitungsgerät sein, insbesondere aber eine der vorhergehend erläuterten Recheneinrichtungen oder eine Vorrichtung zur Datenverarbeitung, insbesondere eine programmierbare Recheneinrichtung oder Vorrichtung zur Datenverarbeitung.

Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. In einem solchen Medium oder Produkt können beispielsweise die vorhergehend erläuterten Dateien gespeichert sein. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen kodiert, die das Programm repräsentieren und welches Code-Mittel umfasst, die adaptiert sind, einen, mehrere oder alle Schritte des in dieser Offenbarung dargestellten Verfahrens zum Zugriff auf einen Speicher eines integrierten Schaltkreises durchzuführen. Das Signal kann ein physikalisches Signal, z.B. ein elektrisches Signal, sein, welches insbesondere technisch oder maschinell erzeugt wird.

Weiter kann das Verfahren zum Zugriff auf einen Speicher eines integrierten Schaltkreises ein computerimplementiertes Verfahren sein. So können z.B. ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann z.B. zumindest eine Recheneinrichtung, insbesondere einen Prozessor, und z.B. zumindest eine Speichereinrichtung umfassen, um die Daten, insbesondere technisch, zu verarbeiten, z.B. elektronisch und/oder optisch. Ein Prozessor kann ein halbleiterbasierter Prozessor sein.

Weiter beschrieben wird ein Computerprogramm oder ein Computerprogrammprodukt, umfassend Befehle, die bei der Ausführung des Programms durch einen Computer diesen veranlassen, einen, mehrere oder alle Schritte des in dieser Offenbarung dargestellten Verfahrens zum Zugriff auf einen Speicher eines integrierten Schaltkreises auszuführen. Weiter beschrieben wird ein computerlesbares (Speicher-)Medium, umfassend derartige Befehle. Weiter beschrieben wird ein computerlesbarer Datenträger, auf dem das Computerprogramm (Produkt) gespeichert ist.

Weiter vorgeschlagen wird eine Vorrichtung zur Datenverarbeitung, umfassend Mittel zur Durchführung der Schritte eines Verfahrens zum Zugriff auf einen Speicher eines integrierten Schaltkreises gemäß einer der in dieser Offenbarung beschriebenen Ausführungsformen. Insbesondere kann die Vorrichtung zur Datenverarbeitung Mittel zur Ausführung der Schritte des beschriebenen Verfahrens umfassen. Weiter kann die Vorrichtung zur Datenverarbeitung einen Prozessor umfassen, der so angepasst/konfiguriert ist, dass er das genannte Verfahren ausführt.

Weiter vorgeschlagen wird ein Netzwerk mit mindestens einem integrierten Schaltkreis und mindestens einer weiteren Recheneinrichtung, wobei die weitere Recheneinrichtung in Abhängigkeit der recheneinrichtungsspezifischen Zugriffsinformationen auf den Speicher des integrierten Schaltkreises zugreift.

Weiter beschrieben wird ein Koordinatenmessgerät mit einem solchen Netzwerk.

Dieses Koordinatenmessgerät kann mindestens ein bewegliches Element umfassen. Das bewegliche Element kann insbesondere zur Positionierung eines Sensors des Koordinatenmessgeräts dienen, insbesondere zur Vermessung eines Messobjekts. So kann das bewegliche Element z.B. eine bewegliche Säule eines Portals eines Koordinatenmessgeräts in Portalbauweise sein. Auch kann das bewegliche Element eine Pinole des Koordinatenmessgeräts sein. Auch kann das bewegliche Element ein Schlitten sein, der entlang eines Querträgers des Koordinatenmessgeräts bewegbar ist.

Weiter kann das Koordinatenmessgerät mindestens eine Antriebseinrichtung zur Erzeugung einer Antriebskraft / eines Antriebsmoments für das bewegliche Element umfassen. Die Antriebseinrichtung kann hierbei mittels des integrierten Schaltkreises gesteuert bzw. geregelt werden. Weiter kann das Koordinatenmessgerät mindestens einen Sensor zur Erzeugung von Messwerten umfassen. Der Sensor kann ein Positionssensor zur Erfassung einer Position des beweglichen Teils sein. Hierbei kann der integrierte Schaltkreis die Messwerte dieses Sensors abrufen und speichern, insbesondere in einer oder mehreren Speicherstellen. Weiter kann ein Sensor ein Stromsensor sein, wobei Strommesswerte des Stromsensors in einer oder mehreren Speicherstellen gespeichert werden können. Entsprechend kann der Sensor auch ein Spannungssensor sein, wobei Spannungsmesswerte des Spannungssensors in einer oder mehreren Speicherstellen gespeichert werden können. Auch kann ein Sensor ein Geschwindigkeitssensor sein, wobei Geschwindigkeitsmesswerte des Sensors in einer oder mehreren Speicherstellen gespeichert werden können.

Weiter beschrieben wird ein Verfahren zum Betrieb eines Koordinatenmessgeräts, insbesondere zur Bewegungssteuerung/-regelung von mindestens einem beweglichen Element des Koordinatenmessgeräts, wobei der integrierte Schaltkreis eines vorhergehend erläuterten Netzwerks die entsprechenden Steuersignale bzw. Regelsignale erzeugt.

Die Erfindung wird anhand von Ausführungsbeispielen näher erläutert. Die Figuren zeigen:
- Fig. 1: ein schematisches Blockschaltbild eines erfindungsgemäßen Netzwerks,
- Fig. 2a: ein schematisches Flussdiagramm eines erfindungsgemäßen Verfahrens,
- Fig. 2b: ein schematisches Flussdiagramm eines erfindungsgemäßen Verfahrens in einer weiteren Ausführungsform,
- Fig. 3a: ein schematisches Flussdiagramm eines erfindungsgemäßen Verfahrens in einer weiteren Ausführungsform,
- Fig. 3b: ein schematisches Flussdiagramm eines erfindungsgemäßen Verfahrens in einer weiteren Ausführungsform,
- Fig. 4a: eine beispielhafte Darstellung einer IC-spezifischen Speicherinformation und
- Fig. 4b: eine schematische Ansicht eines IC-Speichers.

Nachfolgend bezeichnen gleiche Bezugszeichen Elemente mit gleichen oder ähnlichen technischen Merkmalen.

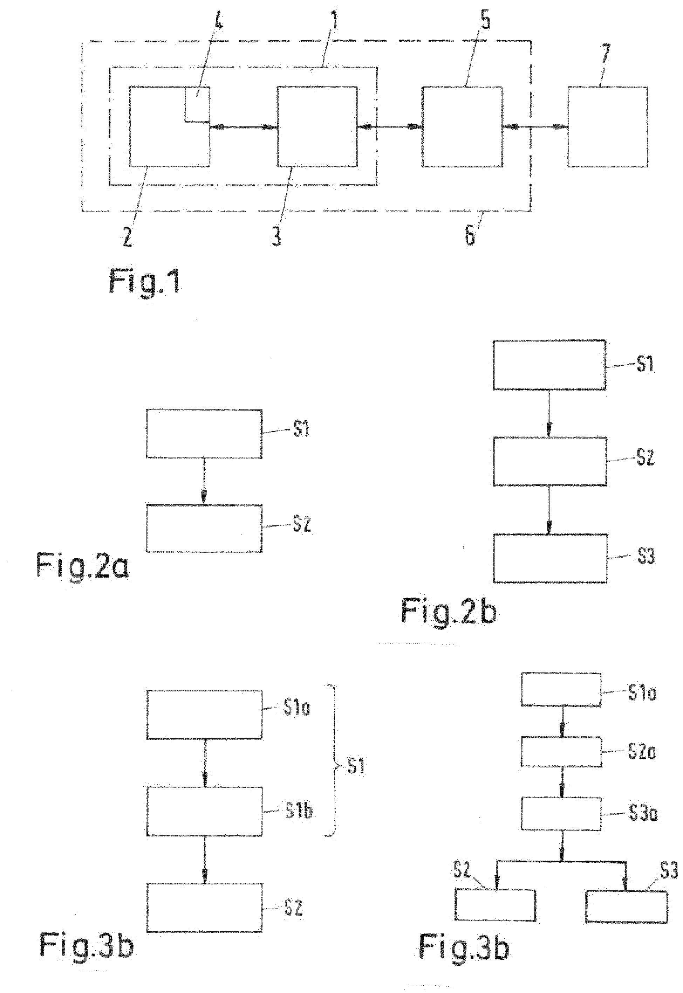

Fig. 1 zeigt ein schematisches Blockschaltbild eines erfindungsgemäßen Netzwerks 1 mit einem als FPGA ausgebildeten integrierten Schaltkreis 2 und einer als Mikrokontroller ausgebildeten CPU-Recheneinrichtung 3. Dargestellt ist weiter ein Speicher 4 des FPGA.

Die CPU-basierte Recheneinrichtung 3 ist hierbei signal- und/oder datentechnisch mit dem integrierten Schaltkreis 2 verbunden.

Weiter dargestellt ist eine weitere Speichereinrichtung 5, die beispielsweise als Festplattenspeicher eines Mainboards ausgebildet sein kann.

Der integrierte Schaltkreis 2, die CPU-Recheneinrichtung 3 sowie die weitere Speichereinrichtung 5 können hierbei Bestandteile eines Koordinatenmessgeräts 6 sein.

Weiter dargestellt ist eine dritte Recheneinrichtung 7, die beispielsweise als PC, insbesondere als Laptop, und somit als weitere CPU-basierte Recheneinrichtung ausgebildet sein kann.

Der Speicher 4 des integrierten Schaltkreises 2 weist eine gewisse Speicherkonfiguration und einen gewissen Speicheraufbau auf, wobei diese durch IC-spezifische Speicherinformationen beschrieben werden können. Insbesondere können die Speicherinformationen Adresswerte von Speicherstellen im Speicher 4 kodieren, an denen Werte vorbestimmter Variablen gespeichert sind/werden sollen. Diese IC-spezifischen Speicherinformationen können vor einer bestimmungsgemäßen Inbetriebnahme des integrierten Schaltkreises 2 bzw. des Netzwerks 1 spezifiziert werden, beispielsweise durch einen Programmierer.

Diese Spezifizierung kann durch eine Datei vorgegeben werden, wobei diese insbesondere eine VHDL-basierte Datei sein kann. Diese Datei kann dann wiederum als Grundlage für eine Kompilierung dienen, wodurch der Aufbau der integrierten Schaltkreises 2 und insbesondere auch der Speicheraufbau des integrierten Schaltkreises 2 dann schaltungstechnisch festgelegt wird.

Weiter können in Abhängigkeit dieser IC-spezifischen Speicherinformationen recheneinrichtungsspezifischen Zugriffsinformationen der CPU-basierten Recheneinrichtung 3 auf den Speicher 4 des integrierten Schaltkreises 2 erzeugt werden. Dies kann durch die Ausführung eines vorbestimmten Übersetzungsalgorithmus erfolgen. Dieser kann aus der VHDL-basierten/-kodierten Datei insbesondere eine C- oder C++-basierte/-kodierte Datei erzeugen. Dies kann insbesondere durch einen sogenannten Suchen-und-Ersetzen-Algorithmus erfolgen. Diese C- oder C++-basierte/-kodierte Datei beschreibt dann die Speicherinformationen in einer für die CPU-basierte Recheneinrichtung 3 lesbaren Form.

Die derart erzeugten Informationen können dann, beispielsweise ebenfalls in Form einer Datei, in der weiteren Speichereinrichtung 5 gespeichert werden, wobei insbesondere die dritte Recheneinrichtung 7 zur Laufzeit auf die derart gespeicherten Informationen zugreifen kann.

Somit können aus diesen gespeicherten, recheneinrichtungsspezifischen Zugriffsinformationen durch Ausführung eines weiteren Übersetzungsalgorithmus weitere Zugriffsinformationen zur Verwendung durch die dritte Recheneinrichtung 7 erzeugt werden, wobei diese Zugriffsinformationen in verschiedenen Programmiersprachen beschrieben sind. Insbesondere können diese weiteren Zugriffsinformationen C#-basiert/- kodiert sein. Dies kann ebenfalls durch einen sogenannten Suchen-und-Ersetzen-Algorithmus erfolgen. Es ist beispielsweise möglich, dass die dritte Recheneinrichtung 7 zur Laufzeit auf die gespeicherten, recheneinrichtungsspezifischen Zugriffsinformationen Informationen zugreift und dann, ebenfalls zur Laufzeit, den weiteren Übersetzungsalgorithmus ausführt. Die durch die Übersetzung erzeugten Informationen können dann in einer nicht dargestellten Speichereinrichtung der dritten Recheneinrichtung 7 gespeichert werden.

Weiter dienen die recheneinrichtungsspezifischen Zugriffsinformationen zur Programmierung der CPU-basierten Recheneinrichtung 3. Hierzu können diese Zugriffsinformationen im Speicher einer externen Entwicklungsrecheneinrichtung gespeichert werden, wobei auf diese Speichereinrichtung bei einer Kompilierung zur Erzeugung von Code oder Code-Mitteln, der durch die CPU-Recheneinrichtung 2 ausführbar ist, zugegriffen werden kann.

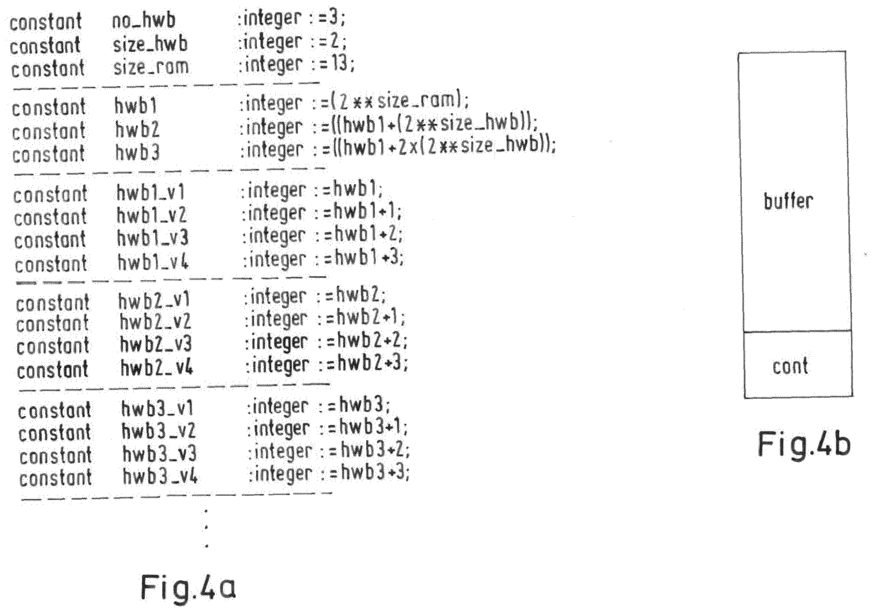

Fig. 2a zeigt ein schematisches Flussdiagramm eines erfindungsgemäßen Verfahrens zum Zugriff auf einen Speicher 4 eines integrierten Schaltkreises 2 durch eine CPU-basierte Recheneinrichtung 3 (siehe Fig. 1). In einem ersten Schritt S1 werden aus vorbestimmten IC-spezifischen Speicherinformationen (die beispielsweise in Fig. 4a dargestellt sind) recheneinrichtungsspezifischen Informationen für Zugriff durch die CPU-basierte Recheneinrichtung 3 auf den Speicher 4 erzeugt. Dies wurde vorhergehend bereits erläutert. Der Schritt S1 kann hierbei durch die CPU-basierte Recheneinrichtung 3 oder durch eine weitere, insbesondere externe Recheneinrichtung durchgeführt werden. Dieser erste Schritt S1 kann insbesondere ein Schritt sein, der vor der Ausführung des Verfahrens zum Zugriff im zweiten Schritt S2 durchgeführt wird und somit nicht zwingend Teil des Verfahrens zum Zugriff ist.

In einem zweiten Schritt S2, der insbesondere zur Laufzeit einer Datenübertragung bzw. Kommunikation zwischen diesen Recheneinrichtungen 2, 3 ausgeführt wird, greift die CPU-basierte Recheneinrichtung 3 in Abhängigkeit der derart erzeugten recheneinrichtungsspezifischen Zugriffsinformationen auf den Speicher 4 des integrierten Schaltkreises 2 zu. Insbesondere kann von der CPU-basierten Recheneinrichtung 3 ein Befehl für den integrierten Schaltkreis 2 erzeugt werden, bei dessen Ausführung durch den integrierten Schaltkreis 2 ein Speicherzugriff notwendig ist, wobei z.B. ein Adresswert der entsprechenden Speicherstelle direkt im Befehl kodiert sein kann. Der Befehl kann, wie vorhergehend erläutert, z.B. ein Lesebefehl oder Schreibbefehl sein.

Fig. 2b zeigt ein schematisches Flussdiagramm eines erfindungsgemäßen Verfahrens in einer weiteren Ausführungsform. Hierbei entsprechen die ersten beiden Schritte S1, S2 des in Fig. 2b dargestellten Verfahrens den ersten beiden Schritten S1, S2 des in Fig. 2a dargestellten Verfahrens.

In einem dritten Schritt S3 greift eine dritte Recheneinrichtung 7 (siehe Fig. 1) in Abhängigkeit von weiteren Zugriffsinformationen auf den Speicher 4 des integrierten Schaltkreises 2 zu. Dieser Zugriff kann ebenfalls zur Laufzeit einer Datenübertragung bzw. Kommunikation zwischen diesen Recheneinrichtungen 2, 7ausgeführt werden. Die weiteren Zugriffsinformationen werden hierfür aus den recheneinrichtungsspezifischen Zugriffsinformationen erzeugt.

Fig. 3a zeigt ein schematisches Flussdiagramm eines erfindungsgemäßen Verfahrens in einer weiteren Ausführungsform. Hierbei ist der erste Schritt S1 detaillierter dargestellt als in der in Fig. 2a dargestellten Ausführungsform. In Teilschritt S1a des ersten Schritts S1 werden die IC-spezifischen Speicherinformationen bereitgestellt, beispielsweise durch Vorgabe durch einen Nutzer. In einem zweiten Teilschritt S1b des ersten Schritts S1 erfolgt das Erzeugen der Zugriffsinformationen durch Ausführung eines Übersetzungsalgorithmus.

Der zweite Schritt S2 der in Fig. 3a dargestellten Ausführungsform entspricht dem zweiten Schritt S2 der in Fig. 2a dargestellten Ausführungsform.

Fig. 3b zeigt ein schematisches Flussdiagramm eines erfindungsgemäßen Verfahrens in einer weiteren Ausführungsform. Hierbei ist der erste Schritt S1 detaillierter dargestellt als in der in Fig. 2b dargestellten Ausführungsform. Die ersten beiden Teilschritte S1a, S1b des in Fig. 3b dargestellten Verfahrens entsprechen den ersten beiden Teilschritte S1a, S1b des in Fig. 3a dargestellten Verfahrens. In einem dritten Teilschritt S3a werden weitere Zugriffsinformationen für den Zugriff durch eine dritte Recheneinrichtung 7 (siehe Fig. 1) aus den im zweiten Teilschritt S2a erzeugten recheneinrichtungsspezifischen Zugriffsinformationen erzeugt. Dies kann durch Ausführen eines weiteren Übersetzungsalgorithmus erfolgen und zur Laufzeit des Verfahrens ausgeführt werden.

Der Übersetzungsalgorithmus kann derart durchgeführt werden, dass die recheneinrichtungsspezifischen Zugriffsinformationen und die weiteren Zugriffsinformationen in verschiedenen Programmiersprachen beschrieben sind.

Der zweite Schritt S2 der in Fig. 3b dargestellten Ausführungsform entspricht dem zweiten Schritt S2 der in Fig. 2a dargestellten Ausführungsform. Der dritte Schritt S3 der in Fig. 3b dargestellten Ausführungsform entspricht dem dritten Schritt S3 der in Fig. 2b dargestellten Ausführungsform. Hierbei ist dargestellt, dass der zweite Schritt S2 und der dritte Schritt nicht zwingend sequentiell aufeinander folgend ausgeführt werden müssen.

Fig. 4a zeigt eine beispielhafte Darstellung von IC-spezifischen Speicherinformationen, die in Form einer VHDL-basierten Datei festgelegt sind.

Dargestellt ist ein Konstanten-Speicherbereich const (siehe Fig. 4b) des Speichers 4 des integrierten Schaltkreises 2. Zusätzlich zu diesem Konstanten-Speicherbereich const umfasst der Speicher 4 einen sogenannten Buffer-Speicherbereich buffer (siehe ebenfalls Fig. 4b).

In einer ersten Zeile wird die Anzahl der Speicherblöcke no_hwb definiert, die im vorliegenden Ausführungsbeispiel 8 (2 exp(3)) beträgt. In einer zweiten Zeile wird die Größe eines solchen Speicherblocks, nämlich die Anzahl an Speicherstellen, festgelegt, die im vorliegenden Beispiel 4 (2 exp(2)) beträgt. In einer dritten Zeile wird die Anzahl von Speicherstellen des Buffer-Speicherbereichs buffer festgelegt, die im vorliegenden Ausführungsbeispiel 2 exp(13) beträgt.

In den dargestellten Zeilen 4 bis 6 wird der Adresswert der ersten Speicherstelle von drei Speicherblöcken definiert. Somit ist ersichtlich, dass nur drei der definierten acht Speicherblöcke in den Speicherinformationen definiert sind. Dies wiederum bedeutet, dass fünf weitere Speicherblöcke, zum Beispiel für andere Anwendungen für die ein Neukonfiguration der Speicherinformationen durchzuführen wäre, zur Verfügung stehen.

In den Zeilen 7 bis 11 werden die Adresswerte der vier Speicherstellen des ersten Speicherblocks definiert. Entsprechend werden in den Zeilen 12 bis 15 die Adresswerte der vier Speicherstellen des zweiten Speicherblocks und in den Zeilen 16 bis 19 die vier Speicherstellen des dritten Speicherblocks definiert.

In Fig. 4b dargestellt ist eine schematische Aufteilung des Speichers 4 des integrierten Schaltkreises 2 (siehe Fig. 1), der einen Buffer-Speicherbereich buffer und einen Konstanten-Speicherbereich const umfasst. Hierbei schließen sich die Speicherstellen des Konstanten-Speicherbereichs const an die Speicherstellen des Buffer-Speicherbereichs buffer an.

### Bezugszeichenliste

- 1: Netzwerk
- 2: integrierter Schaltkreis
- 3: CPU-basierte Recheneinrichtung
- 4: Speicher
- 5: weitere Speichereinrichtung
- 6: Koordinatenmessgerät
- 7: dritte Recheneinrichtung
- S1: erster Schritt
- S1a: erster Teilschritt
- S1b: zweiter Teilschritt
- S2: zweiter Schritt
- buffer: Buffer-Speicherbereich
- const: Konstanten-Speicherbereich

## Patentansprüche

1. Verfahren zum Zugriff auf einen Speicher (4) eines integrierten Schaltkreises (2) durch eine weitere Recheneinrichtung (3), wobei
• recheneinrichtungsspezifische Zugriffsinformationen für den Zugriff aus vorbestimmten IC-spezifischen Speicherinformationen, die in einer Datei kodiert und mit vorbestimmten Zeichen oder Zeichenfolgen bereitgestellt sind und zumindest Informationen über Speicherstellen eines Speicherblocks eines ersten Speicherbereichs umfassen, wobei diese Informationen Adresswerte oder einen Wert für die Berechnung eines Adresswerts umfassen, durch eine computerimplementierte Ausführung eines vorbestimmten Übersetzungsalgorithmus erzeugt werden, indem die vorbestimmten Zeichen oder Zeichenfolgen der IC-spezifischen Speicherinformationen in Zeichen oder Zeichenfolgen übersetzt werden, die diesen vorbestimmten Zeichen oder Zeichenfolgen zugeordnet sind, wobei die recheneinrichtungsspezifischen Zugriffsinformationen in einer weiteren Datei kodiert sind, die in einer Speichereinrichtung gespeichert wird, wobei
• auf die Speichereinrichtung bei einer Kompilierung zur Erzeugung von Code, der durch die weitere Recheneinrichtung ausführbar ist, zugegriffen wird, wobei der Code so erzeugt wird, dass
• die weitere Recheneinrichtung (3) bei Ausführung des Codes in Abhängigkeit der recheneinrichtungsspezifischen Zugriffsinformationen auf den Speicher (4) des integrierten Schaltkreises (2) zugreift, wobei die weitere Recheneinrichtung die recheneinrichtungsspezifischen Zugriffsinformationen nutzt, um einen Zugriffsbefehl zu erzeugen, in dem ein Adresswert einer Speicherstelle des Speichers des integrierten Schaltkreises (2) kodiert ist.

2. Verfahren nach Anspruch 1, **dadurch gekennzeichnet, dass** der integrierte Schaltkreis (2) als FPGA und/oder die weitere Recheneinrichtung (3) als CPU-Recheneinrichtung ausgebildet ist.

3. Verfahren nach einem der vorangegangenen Ansprüche, **dadurch gekennzeichnet, dass** die IC-spezifischen Speicherinformationen VHDL-basiert und/oder die recheneinrichtungsspezifischen Informationen C- oder C++-basiert beschrieben sind.

4. Verfahren nach einem der vorangegangenen Ansprüche, **dadurch gekennzeichnet, dass** die IC-spezifischen Speicherinformationen Informationen über eine Speichergröße und/oder Informationen über eine Anzahl und eine Größe von Speicherbereichen und/oder über eine Anzahl und eine Größe von Speicherblöcken des Speichers oder Speicherbereichs und/oder über eine Größe eines Konstanten-Speicherbereichs (const) und/oder über eine Größe eines Buffer-Speicherbereichs (buffer) umfassen.

5. Verfahren nach einem der vorangegangenen Ansprüche, **dadurch gekennzeichnet, dass** eine zweite weitere Recheneinrichtung (7) in Abhängigkeit von den weiteren Zugriffsinformationen auf den Speicher (4) des integrierten Schaltkreises (2) zugreift, wobei die weiteren Zugriffsinformationen aus den recheneinrichtungsspezifischen Zugriffsinformationen durch Ausführung eines vorbestimmten Übersetzungsalgorithmus erzeugt sind oder werden.

6. Verfahren nach einem der vorangegangenen Ansprüche, **dadurch gekennzeichnet, dass** die Informationen über Speicherstellen eines Speicherblocks Informationen über eine erste Speicherstelle eines ersten Speicherblocks umfassen, wobei die erste Speicherstelle eines ersten Speicherblocks in Abhängigkeit einer Information über eine erste Speicherstelle eines ersten Speicherbereichs bestimmt wird.

7. Verfahren nach Anspruch 6, **dadurch gekennzeichnet, dass** die Informationen über Speicherstellen eines weiteren Speicherblocks Informationen über eine erste Speicherstelle des weiteren Speicherblocks umfassen, wobei die erste Speicherstelle des weiteren Speicherblocks in Abhängigkeit der Information über die erste Speicherstelle des ersten Speicherblocks und in Abhängigkeit der Information über die Größe der Speicherblöcke bestimmt wird und/oder dass eine Information über eine weitere Speicherstellen eines Speicherblocks in Abhängigkeit der Information über die erste Speicherstelle des Speicherblocks und einer vorbestimmten Speicherstellenzählkonstanten bestimmt wird.

8. Verfahren nach einem der vorangegangenen Ansprüche, **dadurch gekennzeichnet, dass** die Zugriffsinformationen in einer Speichereinrichtung der weiteren Recheneinrichtung (3) oder in einer von dieser zugänglichen Speichereinrichtung gespeichert sind oder werden.

9. Verfahren nach einem der vorangegangenen Ansprüche, **dadurch gekennzeichnet, dass** der integrierte Schaltkreis und die weitere Recheneinrichtung (3) Teil einer Koordinatenmesseinrichtung sind.

10. Verfahren nach einem der vorangegangenen Ansprüche, **dadurch gekennzeichnet, dass** das Verfahren ein computerimplementiertes Verfahren ist.

11. Programm, welches, wenn es auf oder durch einen Computer ausgeführt wird, den Computer veranlasst, alle Schritte eines Verfahrens zum Zugriff auf einen Speicher eines integrierten Schaltkreises gemäß einem der Ansprüche 1 bis 10 durchzuführen.

12. Vorrichtung zur Datenverarbeitung, umfassend Mittel (2) zur Durchführung der Schritte eines Verfahrens zum Zugriff auf einen Speicher eines integrierten Schaltkreises gemäß einem der Ansprüche 1 bis 10 durchzuführen.

13. Netzwerk mit mindestens einem integrierten Schaltkreis (2) und mindestens einer weiteren Recheneinrichtung (3), wobei die weitere Recheneinrichtung (3) in Abhängigkeit von recheneinrichtungsspezifischen Informationen auf den Speicher (4) des integrierten Schaltkreises (2) zugreift, die aus vorbestimmten IC-spezifischen Speicherinformationen mit vorbestimmten Zeichen oder Zeichenfolgen, die in einer Datei kodiert sind und zumindest Informationen über Speicherstellen eines Speicherblocks eines ersten Speicherbereichs umfassen, wobei diese Informationen Adresswerte oder einen Wert für die Berechnung eines Adresswerts umfassen, durch eine computerimplementierte Ausführung eines vorbestimmten Übersetzungsalgorithmus erzeugt werden, indem die vorbestimmten Zeichen oder Zeichenfolgen der IC-spezifischen Speicherinformationen in Zeichen oder Zeichenfolgen übersetzt werden, die diesen vorbestimmten Zeichen oder Zeichenfolgen zugeordnet sind, wobei eine weitere Datei, die die recheneinrichtungsspezifischen Zugriffsinformationen kodiert, erzeugt und in einer Speichereinrichtung gespeichert wird, wobei auf die Speichereinrichtung bei einer Kompilierung zur Erzeugung von Code, der durch die weitere Recheneinrichtung (3) ausführbar ist, zugegriffen wird, wobei der Code so erzeugt wird, dass die weitere Recheneinrichtung (3) bei Ausführung des Codes in Abhängigkeit der recheneinrichtungsspezifischen Zugriffsinformationen auf den Speicher (4) des integrierten Schaltkreises (2) zugreift, wobei die weitere Recheneinrichtung (3) die recheneinrichtungsspezifischen Zugriffsinformationen nutzt, um einen Zugriffsbefehl zu erzeugen, wobei durch die weitere Recheneinrichtung (3) ein Zugriffsbefehl erzeugt wird, in dem ein Adresswert einer Speicherstelle des Speichers des integrierten Schaltkreises (2) kodiert ist.

## Claims

1. Method for accessing a memory (4) of an integrated circuit (2) by way of a further computing device (3), wherein
• computing-device-specific access information for the access is generated from predetermined IC-specific memory information, which is encoded in a file and provided with predetermined characters or strings and at least includes information about memory locations of a memory block of a first memory area, said information including address values or a value for the calculation of an address value, by way of a computer-implemented execution of a predetermined translation algorithm by virtue of the predetermined characters or strings of the IC-specific memory information being translated into characters or strings that are assigned to these predetermined characters or strings, wherein the computing-device-specific access information is encoded in a further file that is stored in a memory device, wherein
• the memory device is accessed during a compiling process to generate code that can be executed by the further computing device, wherein the code is generated in such a way that
• the further computing device (3) accesses the memory (4) of the integrated circuit (2) depending on the computing-device-specific access information when the code is executed, wherein the further computing device uses the computing-device-specific access information to generate an access command in which an address value of a memory location of the memory of the integrated circuit (2) is encoded.

2. Method according to Claim 1, **characterized in that** the integrated circuit (2) is in the form of an FPGA and/or the further computing device (3) is in the form of a CPU computing device.

3. Method according to either one of the preceding claims, **characterized in that** the IC-specific memory information is described based on VHDL and/or the computing device-specific information is described based on C or C++.

4. Method according to any one of the preceding claims, **characterized in that** the IC-specific memory information includes information about a memory size and/or information about a number and size of memory areas and/or about a number and size of memory blocks of the memory or memory area and/or about a size of a constant memory area (const) and/or about a size of a buffer memory area (buffer).

5. Method according to any one of the preceding claims, **characterized in that** a second further computing device (7) accesses the memory (4) of the integrated circuit (2) depending on the further access information, wherein the further access information is generated from the computing-device-specific access information by way of an execution of a predetermined translation algorithm.

6. Method according to any one of the preceding claims, **characterized in that** the information about memory locations of a memory block includes information about a first memory location of a first memory block, wherein the first memory location of a first memory block is determined depending on information about a first memory location of a first memory area.

7. Method according to Claim 6, **characterized in that** the information about memory locations of a further memory block includes information about a first memory location of the further memory block, wherein the first memory location of the further memory block is determined depending on the information about the first memory location of the first memory block and depending on the information about the size of the memory blocks and/or that information about a further memory location of a memory block is determined depending on the information about the first memory location of the memory block and a predetermined memory location count constant.

8. Method according to any one of the preceding claims, **characterized in that** the access information is stored in a memory device of the further computing device (3) or in a memory device that can be accessed thereby.

9. Method according to any one of the preceding claims, **characterized in that** the integrated circuit and the further computing device (3) are part of a coordinate measuring device.

10. Method according to any one of the preceding claims, **characterized in that** the method is a computer-implemented method.

11. Program that, when executed on or by a computer, causes the computer to perform all steps of a method for accessing a memory of an integrated circuit according to any one of Claims 1 to 10.

12. Apparatus for data processing, comprising means (2) for performing the steps of a method for accessing a memory of an integrated circuit according to any one of Claims 1 to 10.

13. Network having at least one integrated circuit (2) and at least one further computing device (3), wherein the further computing device (3) accesses the memory (4) of the integrated circuit (2) depending on computing-device-specific information, which is generated from predetermined IC-specific memory information with predetermined characters or strings and is encoded in a file and at least includes information about memory locations of a memory block of a first memory area, said information including address values or a value for the calculation of an address value, by way of a computer-implemented execution of a predetermined translation algorithm by virtue of the predetermined characters or strings of the IC-specific memory information being translated into characters or strings that are assigned to these predetermined characters or strings, wherein a further file that encodes the computing-device-specific access information is generated and stored in a memory device, wherein the memory device is accessed during a compiling process to generate code that can be executed by the further computing device (3), wherein the code is generated in such a way that the further computing device (3) accesses the memory (4) of the integrated circuit (2) when the code is executed depending on the computing-device-specific access information, wherein the further computing device (3) uses the computing-device-specific access information to generate an access command, wherein the further computing device (3) generates an access command in which an address value of a memory location of the memory of the integrated circuit (2) is encoded.

## Revendications

1. Procédé pour accéder à une mémoire (4) d'un circuit intégré (2) par un autre dispositif de calcul (3), dans lequel
• des informations d'accès spécifiques au dispositif de calcul permettant l'accès à partir d'informations de mémoire prédéterminées spécifiques au circuit intégré, qui sont codées dans un fichier et fournies avec des caractères ou des chaînes de caractères prédéterminés et qui comprennent au moins des informations concernant des emplacements de mémoire d'un bloc de mémoire d'une première zone de mémoire, lesdites informations comprenant des valeurs d'adresse ou une valeur permettant de calculer une valeur d'adresse, étant générées par une exécution, mise en œuvre par ordinateur, d'un algorithme de traduction prédéterminé, en traduisant les caractères ou chaînes de caractères prédéterminés des informations de mémoire spécifiques au circuit intégré en caractères ou chaînes de caractères associés auxdits caractères ou auxdites chaînes de caractères prédéterminés, les informations d'accès spécifiques au dispositif de calcul étant codées dans un autre fichier qui est stocké dans un dispositif de mémoire, dans lequel
• un accès est effectué au dispositif de stockage lors d'une compilation destinée à générer un code qui est exécutable par l'autre dispositif de calcul, le code étant généré de telle sorte que
• l'autre dispositif de calcul (3) accède à la mémoire (4) du circuit intégré (2) lors de l'exécution du code en fonction des informations d'accès spécifiques au dispositif de calcul, l'autre dispositif de calcul utilisant les informations d'accès spécifiques au dispositif de calcul pour générer une instruction d'accès dans laquelle est codée une valeur d'adresse d'un emplacement de mémoire de la mémoire du circuit intégré (2) .

2. Procédé selon la revendication 1, **caractérisé en ce que** le circuit intégré (2) est conçu sous la forme d'un FPGA et/ou **en ce que** l'autre dispositif de calcul (3) est conçu sous la forme d'un dispositif de calcul à CPU.

3. Procédé selon l'une des revendications précédentes, **caractérisé en ce que** les informations de mémoire spécifiques au circuit intégré sont écrites en VHDL et/ou **en ce que** les informations spécifiques au dispositif de calcul sont écrites en C ou C++.

4. Procédé selon l'une des revendications précédentes, **caractérisé en ce que** les informations de mémoire spécifiques au circuit intégré comprennent des informations concernant une taille de mémoire et/ou des informations concernant un nombre et une taille de zones de mémoire et/ou concernant un nombre et une taille de blocs de mémoire de la mémoire ou de la zone de mémoire et/ou concernant une taille d'une zone de mémoire constante (const) et/ou concernant une taille d'une zone de mémoire tampon (buffer).

5. Procédé selon l'une des revendications précédentes, **caractérisé en ce qu'**un second autre dispositif de calcul (7) accède à la mémoire (4) du circuit intégré (2) en fonction des autres informations d'accès, les autres informations d'accès étant ou pouvant être générées à partir des informations d'accès spécifiques au dispositif de calcul par exécution d'un algorithme de traduction prédéterminé.

6. Procédé selon l'une des revendications précédentes, **caractérisé en ce que** les informations concernant des emplacements de mémoire d'un bloc de mémoire comprennent des informations concernant un premier emplacement de mémoire d'un premier bloc de mémoire, le premier emplacement de mémoire d'un premier bloc de mémoire étant déterminé en fonction d'une information concernant un premier emplacement de mémoire d'une première zone de mémoire.

7. Procédé selon la revendication 6, **caractérisé en ce que** les informations concernant des emplacements de mémoire d'un autre bloc de mémoire comprennent des informations concernant un premier emplacement de mémoire de l'autre bloc de mémoire, le premier emplacement de mémoire de l'autre bloc de mémoire étant déterminé en fonction de l'information concernant le premier emplacement de mémoire du premier bloc de mémoire et en fonction de l'information concernant la taille des blocs de mémoire et/ou **en ce qu'**une information concernant un autre emplacement de mémoire d'un bloc de mémoire est déterminée en fonction de l'information concernant le premier emplacement de mémoire du bloc de mémoire et d'une constante prédéterminée de nombre d'emplacements de mémoire.

8. Procédé selon l'une des revendications précédentes, **caractérisé en ce que** les informations d'accès sont ou vont être stockées dans un dispositif de mémoire de l'autre dispositif de calcul (3) ou dans un dispositif de mémoire accessible par celui-ci.

9. Procédé selon l'une des revendications précédentes, **caractérisé en ce que** le circuit intégré et l'autre dispositif de calcul (3) font partie d'un dispositif de mesure de coordonnées.

10. Procédé selon l'une des revendications précédentes, **caractérisé en ce que** le procédé est un procédé mis en œuvre par ordinateur.

11. Programme qui, lorsqu'il est exécuté sur ou par un ordinateur, amène l'ordinateur à exécuter toutes les étapes d'un procédé d'accès à une mémoire d'un circuit intégré selon l'une des revendications 1 à 10.

12. Dispositif de traitement de données comprenant des moyens (2) destinés à exécuter les étapes d'un procédé d'accès à une mémoire d'un circuit intégré selon l'une des revendications 1 à 10.

13. Réseau comprenant au moins un circuit intégré (2) et au moins un autre dispositif de calcul (3), l'autre dispositif de calcul (3) accédant à la mémoire (4) du circuit intégré (2) en fonction d'informations spécifiques au dispositif de calcul, lesquelles sont constituées d'informations de mémoire prédéterminées spécifiques au circuit intégré comportant des caractères ou des chaînes de caractères prédéterminés qui sont codés dans un fichier et comprennent au moins des informations concernant des emplacements de mémoire d'un bloc de mémoire d'une première zone de mémoire, lesdites informations comprenant des valeurs d'adresse ou une valeur permettant de calculer une valeur d'adresse, étant générées par une exécution, mise en œuvre par ordinateur, d'un algorithme de traduction prédéterminé, en traduisant les caractères ou chaînes de caractères prédéterminés des informations de mémoire spécifiques au circuit intégré en caractères ou chaînes de caractères qui sont associés auxdits caractères ou auxdites chaînes de caractères prédéterminés, un autre fichier, qui code les informations d'accès spécifiques au dispositif de calcul, étant généré et stocké dans un dispositif de mémoire, un accès étant effectué au dispositif de mémoire lors d'une compilation destinée à générer un code qui est exécutable par l'autre dispositif de calcul (3), le code étant généré de telle sorte que l'autre dispositif de calcul (3) accède à la mémoire (4) du circuit intégré (2) lors de l'exécution du code en fonction des informations d'accès spécifiques au dispositif de calcul, l'autre dispositif de calcul (3) utilisant les informations d'accès spécifiques au dispositif de calcul pour stocker une instruction d'accès, une instruction d'accès étant générée par l'autre dispositif de calcul (3) en codant une valeur d'adresse d'un emplacement de mémoire de la mémoire du circuit intégré (2).
